# EUROPEAN PATENT SPECIFICATION

(11) **EP 3 553 398 B1**
(45) Date of publication and mention of the grant of the patent: **07.09.2022**
(21) Application number: 17848199.0
(22) Date of filing: 10.11.2017
(51) Int. Cl.: F24F 5/00, F25B 19/02, B60H 1/00, B60H 1/32, F25B 13/00, F25B 49/02

(54) **AIR CONDITIONING HEAT PUMP SYSTEM WHICH USES INJECTOR, AIR CONDITIONER, AND AIR CONDITIONER CONTROL METHOD**
KLIMAANLAGENWÄRMEPUMPENSYSTEM MIT VERWENDUNG EINES INJEKTORS, KLIMAANLAGE UND KLIMAANLAGENSTEUERUNGSVERFAHREN
SYSTÈME DE POMPE À CHALEUR DE CLIMATISATION QUI UTILISE UN INJECTEUR, CLIMATISEUR ET PROCÉDÉ DE COMMANDE DE CLIMATISEUR

(30) Priority: 12.09.2016 CN 201610818928
(43) Date of publication of application: 16.10.2019
(73) Proprietor: Qingdao Hisense Hitachi Air-Conditioning Systems Co., Ltd., Qingdao, Shandong 266555 (CN)
(72) Inventor: LIU, Min, Qingdao Shandong 266555 (CN); ZHANG, Wenqiang, Qingdao Shandong 266555 (CN); LI, Hu, Qingdao Shandong 266555 (CN); DU, Minglong, Qingdao Shandong 266555 (CN)
(74) Representative: Petraz, Gilberto Luigi
(86) International application number: PCT/CN2017/110516
(87) International publication number: WO 2018/046026

(56) References cited:
- CN-A- 102 734 886
- CN-A- 103 743 020
- CN-A- 103 900 174
- CN-A- 103 900 174
- CN-A- 104 197 444
- CN-A- 105 020 936
- CN-A- 105 333 545
- CN-A- 105 737 459
- JP-A- 2007 003 166
- JP-A- 2015 158 329
- KR-A- 20140 141 771
- KR-B1- 101 212 686

## Description

### TECHNICAL FIELD

The present disclosure relates to the field of air conditioning, and more particularly, to an air conditioning heat pump system using an ejector, an air conditioner, and an air conditioner control method.

### BACKGROUND

Air conditioning, with its superior cooling and heating functions, has become an important means for people to cool down and warm up the room in daily life. Air conditioning mainly uses air conditioning heat pump systems to extract cold and heat from the environment to cool down or warm up the indoor environment. The air-conditioning heat pump system mainly extracts the cold and heat from the environment through the work of a compressor. In this process, the compressor consumes electric energy to compress a low-temperature low-pressure refrigerant into a high-temperature high-pressure refrigerant. And then, in a cooling mode, the high-temperature high-pressure refrigerant is condensed and cooled by an outdoor heat exchanger, and is then input to an indoor heat exchanger for evaporation and heat exchange to cool down the room. Alternatively, in a heating mode, the high-temperature high-pressure refrigerant is input to the indoor heat exchanger for condensation and heat dissipation, thereby transferring heat to the indoor environment. Therefore, how to reduce power consumption of the compressor is key to improving an energy efficiency of the heat pump system.

KR 20140141771 provides that a heat pump system that includes an ejector spraying a refrigerant passing through or bypassing a condenser and the refrigerant coming out of an evaporator to the compressor side, thereby increasing the refrigerant flow of the evaporator and the condenser to increase the heating capacity. However, this document does not disclose a second electromagnetic valve and a second check valve in the arrangement according to the present invention.

In addition, it is possible to secure though heating performance in the winter or a cold region by using an ejector to increase heating capacity without increasing the capacity of the compressor and reduce the cost of heating.

CN 103900174 provides that a dual-temperature radiation heat pump type room air conditioner capable of processing fresh air comprises an air compressor. The air compressor is connected with an outdoor heat exchanger through a four-way reversing valve, the outdoor heat exchanger is connected with a metal radiation plate and an induction-type fresh air processor which are connected in parallel, a valve combination is arranged on a connecting pipeline, and the metal radiation plate and the induction-type fresh air processor are connected with the four-way reversing valve and the outdoor heat exchanger through an ejector and a three-way valve backwards. The refrigerant flow path is changed through the four-way reversing valve, the three-way valve and the valve combination to enable the metal radiation plate and the induction-type fresh air processor to serve as a parallel evaporator in the summer working condition and to serve as a parallel condenser and provide the defrosting working condition in the winter working condition. The dual-temperature radiation heat pump type room air conditioner meets the cold source requirement for temperature and humidity independent control in the summer working condition of the single air compressor, the dual advantages of radiation and fresh air heat/cold supplying are adopted in the winter working condition and the summer working condition, the quality of indoor air can be improved, the thermal comfort can be improved, secondary heat exchanging losses can be avoided and the energy utilization rate can be increased.

### SUMMARY

According to the present invention the above objective is solved by the features of claims 1 and 8. Preferred embodiments are defined in the dependent claims. The present invention provides an air conditioning heat pump system using an ejector, which includes a compression assembly, an outdoor heat exchanger, a first throttle device, an indoor heat exchanger and an ejector. An injection inlet of the ejector is connected to one end of the indoor heat exchanger, an ejector inlet of the ejector is connected to one end of the outdoor heat exchanger, and an outlet end of the ejector is connected to a third end of the compression assembly. A first end of the compression assembly is connected to the one end of the outdoor heat exchanger, and a second end of the compression assembly is connected to another end of the indoor heat exchanger. One end of the first throttle device is connected to another end of the outdoor heat exchanger, and another end of the first throttle device is connected to the one end of the indoor heat exchanger.

The air conditioning heat pump system using an ejector further includes: a controllable valve for controlling the flow direction arranged on a pipe between the first end of the compression assembly and the one end of the outdoor heat exchanger, a first electromagnetic valve arranged on a pipe between the ejector inlet of the ejector and the one end of the outdoor heat exchanger, a second electromagnetic valve arranged on a pipe between the another end of the first throttle device and the one end of the indoor heat exchanger, a third electromagnetic valve arranged on a pipe between an injection inlet of the ejector and the one end of the indoor heat exchanger, a first check valve arranged on a pipe between the third end of the compression assembly and the outlet end of the ejector, a second check valve arranged on a pipe between a fourth end of the compression assembly and the another end of the first throttle device, and a controller, wherein
a flow direction of the first check valve is from the outlet end of the ejector to the third end of the compression assembly;
a flow direction of the second check valve is from the fourth end of the compression assembly to the another end of the first throttle device;
the controllable valve is in an on state when a refrigerant flows from the first end of the compression assembly to the one end of the outdoor heat exchanger; and
the controller is configured to control opening and closing of the first electromagnetic valve, the second electromagnetic valve, and the third electromagnetic valve according to a current operating mode.

In a second aspect, some embodiments of the present invention provide an air conditioner, which includes the air conditioning heat pump system using an ejector according to the first aspect.

In a third aspect, some embodiments of the present invention provide an air conditioner control method, which includes:
controlling, by the controller in the air conditioner, the opening and closing of the first electromagnetic valve, the second electromagnetic valve, and the third electromagnetic valve according to a current operating mode.

In a fourth aspect, some embodiments of the present disclosure provide an outdoor unit, which includes the air conditioning heat pump system using an ejector according to the first aspect.

### BRIEF DESCRIPTION OF THE DRAWINGS

In order to describe technical solutions in embodiments of the present invention more clearly, the accompanying drawings to be used in the description of embodiments or the prior art will be introduced briefly. Obviously, the accompanying drawings to be described below are merely some embodiments of the present invention, and a person of ordinary skill in the art can obtain other drawings according to those drawings without paying any creative effort.
FIG. 1 is a schematic structural diagram of an air conditioning heat pump system using an ejector according to an embodiment of the present invention;
FIG. 2 is a schematic structural diagram of a compression assembly according to an embodiment of the present invention;
FIG. 3 is a schematic structural diagram of an air conditioning heat pump system using an ejector according to another embodiment of the present invention;
FIG. 4 is a diagram showing a flow direction of refrigerant in a cooling mode in the air conditioning heat pump system using an ejector shown in FIG. 3 according to embodiments of the present invention;
FIG. 5 is a diagram showing a flow direction of refrigerant in a normal heating mode in the air conditioning heat pump system using an ejector shown in FIG. 3 according to embodiments of the present invention;
FIG. 6 is a diagram showing a flow direction of refrigerant in a low-temperature heating mode in the air conditioning heat pump system using an ejector shown in FIG. 3 according to embodiments of the present invention;
FIG. 7 is a schematic structural diagram of an air conditioning heat pump system using an ejector according to yet another embodiment of the present invention;
FIG. 8 is a diagram showing a flow direction of refrigerant in a cooling mode in the air conditioning heat pump system using an ejector shown in FIG. 7 according to embodiments of the present invention;
FIG. 9 is a diagram showing a flow direction of refrigerant in a heating mode in the air conditioning heat pump system using an ejector shown in FIG. 7 according to embodiments of the present invention;
FIG. 10 is a schematic structural diagram of an air conditioner according to embodiments of the present invention;

### DETAILED DESCRIPTION

The technical solutions in the embodiments of the present invention will be described clearly and completely with reference to the accompanying drawings in the embodiments of the present invention.

Obviously, the described embodiments are merely some but not all of embodiments of the present invention.

In order to enable a person skilled in the art to better understand the technical solutions of the present disclosure, the present disclosure will be further described in detail below in combination with the accompanying drawings and specific embodiments.

In embodiments of the present invention, terms "arranged", "connected", "connection", etc. shall be understood in a broad sense, unless otherwise explicitly defined or limited. For example, it may be a fixed connection, a detachable connection, or an integral connection; it may be a mechanical connection or an electrical connection; it may be directly connected or indirectly connected through an intermediate medium; it may be internal connection of two elements or interaction of two elements. Specific meanings of the above terms in the present disclosure shall be understood by a person skilled in the art on a case-by-case basis.

Air conditioning heat pump systems usually use ejectors to recover the expansion work of the air conditioning system to reduce the power consumption of the compressor. Specifically, the ejector depressurizes the high pressure refrigerant entering from an injection inlet thereof through throttling of an internal nozzle of the ejector to form a low pressure environment, thereby attracting a low pressure refrigerant at an ejector inlet of the ejector into an air-suction chamber of the ejector to be mixed. Then, through an action of a mixing section and a diffusion section, a medium-pressure refrigerant is formed, thereby increasing a pressure at a suction port of the compressor and reducing the power consumption of the compressor.

However, air conditioning systems with ejectors typically have only a cooling mode and no heating mode.

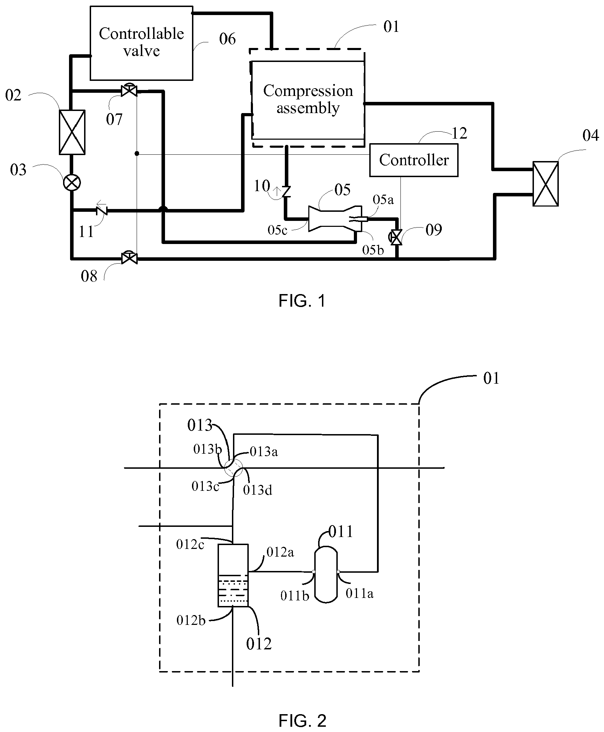

In order to achieve both a cooling mode and a heating mode, embodiments of the present invention provide an air conditioning heat pump system using an ejector. As shown in FIG. 1, the air conditioning heat pump system using an ejector includesa compression assembly 01, an outdoor heat exchanger 02, a first throttle device 03, an indoor heat exchanger 04 and an ejector 05. The ejector 05 includes three ports: an injection inlet 05a, an ejector inlet 05b, and an outlet end 05c. The injection inlet 05a of the ejector 05 is connected to one end of the indoor heat exchanger 04, and the ejector inlet 05b of the ejector is connected to one end of the outdoor heat exchanger 02, and the outlet end 05c of the ejector 05 is connected to a third end of the compression assembly 01. A first end of the compression assembly 01 is connected to the one end of the outdoor heat exchanger 02, and a second end of the compression assembly 01 is connected to another end of the indoor heat exchanger 04. One end of the first throttle device 03 is connected to another end of the outdoor heat exchanger 02, and another end of the first throttle device 03 is connected to the one end of the indoor heat exchanger 04.

In addition, the air conditioning heat pump system using an ejector further includes: a controllable valve 06 for controlling the flow direction arranged on a pipe between the first end of the compression assembly 01 and the one end of the outdoor heat exchanger 02, a first electromagnetic valve 07 arranged on a pipe between the ejector inlet 05b of the ejector 05 and the one end of the outdoor heat exchanger 02, a second electromagnetic valve 08 arranged on a pipe between the another end of the first throttle device 03 and the one end of the indoor heat exchanger 04, a third electromagnetic valve 09 arranged on a pipe between the injection inlet 05a of the ejector 05 and the one end of the indoor heat exchanger 04, a first check valve 10 arranged on a pipe between the third end of the compression assembly 01 and the outlet end 05c of the ejector 05, a second check valve 11 arranged on a pipe between a fourth end of the compression assembly 01 and the another end of the first throttle device 03, and a controller 12.

The controllable valve 06 is in an on state when a refrigerant flows from the first end of the compression assembly 01 to the one end of the outdoor heat exchanger 02.A flow direction of the first check valve10 is from the outlet end 05c of the ejector 05 to the third end of the compression assembly 01.A flow direction of the second check valve 11 is from the fourth end of the compression assembly 01 to the another end of the first throttle device 03.The controller 12 is configured to control opening and closing of the first electromagnetic valve 07, the second electromagnetic valve 08, and the third electromagnetic valve 09 according to a current operating mode.

For example, the controller 12 may be implemented in a general-purpose processor. The general-purpose processor executes machine readable instructions stored in non-transitory memory, such that the general-purpose processor can perform functions described in detail herein. In some other examples, the controller may be implemented in a special-purpose processor, such as an application-specific integrated circuit (ASIC), which is configured to perform the functions described in detail herein.

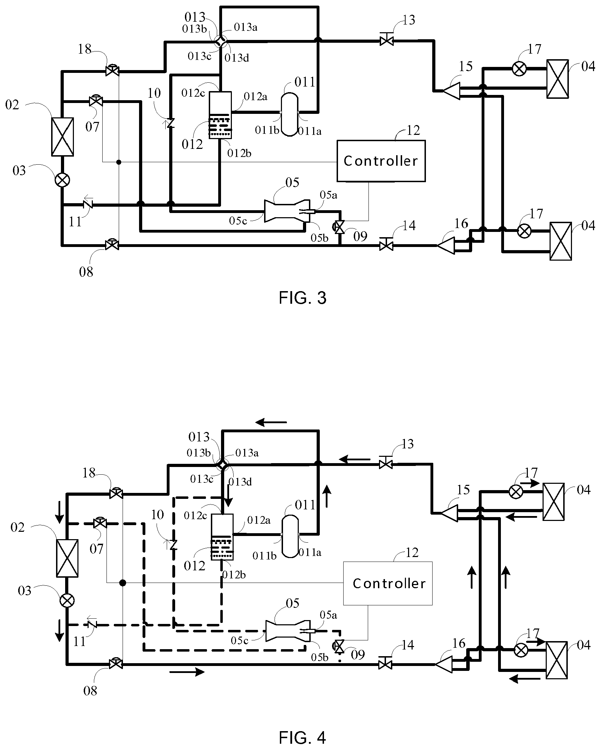

For example, in a case where the air conditioning heat pump system using an ejector described above is a household air conditioning system (that is, the air conditioning heat pump system using an ejector includes only one indoor heat exchanger 04), the first throttle device 03 is a capillary or an electronic expansion valve. Meanwhile, as shown in FIGS. 1 and 3, a gas-side shutoff valve 13 is disposed on the pipe between the another end of the indoor heat exchanger 04 and the second end of the compression assembly 01, and a liquid-side shutoff valve 14 is disposed on the pipe between the one end of the indoor heat exchanger 04 and the second electromagnetic valve 08.

In a case where the air conditioning heat pump system using an ejector is a multi-split system (that is, the air conditioning heat pump system using an ejector includes a plurality of indoor heat exchangers 04), the first throttle device 03 is an electronic expansion tube. Meanwhile, as shown in FIG. 3, a gas-side shutoff valve 13 disposed on a pipe between the another ends of the plurality of indoor heat exchangers 04 and the second end of the compression assembly 01 is connected with the plurality of indoor heat exchangers 04 through a gas-side branch tube 15, and a liquid-side shutoff valve 14 disposed on a pipe between the one ends of the plurality of indoor heat exchangers 04 and the second electromagnetic valve 08 is connected with the plurality of indoor heat exchangers 04 through a liquid-side branch tube 16.

Optionally, in the case where the air conditioning heat pump system using an ejector is a multi-split system, as shown in FIG. 3, the air conditioning heat pump system using an ejector provided by embodiments of the present invention further includes a plurality of second throttle devices 17. Each of the plurality of second throttle devices 17 is disposed on a pipe between the liquid-side shutoff valve 14 and one end of a corresponding one of the plurality of indoor heat exchangers 04.

Each of the plurality of second throttle devices 17 is configured to control a flow rate of refrigerant on a pipe between a corresponding one of the plurality of indoor heat exchangers 04 and the injection inlet 05a of the ejector 05.

For example, as shown in FIG. 2, the compression assembly 01 in embodiments of the present invention includes a compressor 011, a separator 012, and a four-way valve 013. The compressor 011 includes an exhaust port 011a and an intake port 011b. The separator 012 includes a gas outlet end 012a, a liquid outlet end 012b, and an inlet end 012c. The four-way valve 013 includes a first port 013a, a second port 013b, a third port 013c, and a fourth port 013d.

The first port 013a is connected to the exhaust port 011a of the compressor 011. The second port 013b is connected to the one end of the outdoor heat exchanger 02. The third port 013c is connected to the inlet end 012c of the separator 012. The fourth port 013d is connected to the another end of the indoor heat exchanger 04.The intake port 011b of the compressor 011 is connected to the gas outlet end 012a of the separator 012. The liquid outlet end 012b of the separator 012 is connected to the another end of the first throttle device 03.

For example, referring to FIG. 3, which is a schematic structural diagram of an air conditioning heat pump system using an ejector according to another embodiment of the present disclosure, in a case where the controllable valve 06 is a fourth electromagnetic valve 18, the controller 12 is further configured to control opening and closing of the fourth electromagnetic valve 18. In an example, the controller 12 is configured to:in a cooling mode, control the fourth electromagnetic valve 18 and the second electromagnetic valve 08 to open the pipe, and control the first electromagnetic valve 07 and the third electromagnetic valve 09 to close the pipe; or, in a normal heating mode, control the fourth electromagnetic valve 18 and the second electromagnetic valve 08 to open the pipe, and control the first electromagnetic valve 07 and the third electromagnetic valve 09 to close the pipe; or,in a low-temperature heating mode, control the fourth electromagnetic valve 18 and the second electromagnetic valve 08 to close the pipe, and control the first electromagnetic valve 07 and the third electromagnetic valve 09 to open the pipe.

In an example, referring to FIG. 4, which shows a flow direction of refrigerant in the cooling mode, it is known that in the cooling mode, the compressor 011 compresses a low-temperature low-pressure gas refrigerant into a high-temperature high-pressure gas refrigerant, and discharges the high-temperature high-pressure gas refrigerant through the exhaust port 011a. The high-temperature high-pressure gas refrigerant sequentially passes through the first port 013a and the second port 013b of the four-way valve 013 and the fourth electromagnetic valve 18, and enters the outdoor heat exchanger 02. In this case, the outdoor heat exchanger 02 serves as a condenser, condensing the high-temperature high-pressure gas refrigerant into a medium-temperature high-pressure liquid refrigerant. Then, the medium-temperature high-pressure liquid refrigerant enters the first throttle device 03 to be depressurized. Then, the liquid refrigerant passes through the second electromagnetic valve 08, a liquid side shutoff valve 14, a liquid side branch tube 16, and the second throttle device 17, and enters the indoor heat exchanger 04. The indoor heat exchanger 04 serves as an evaporator, evaporating a low-temperature low-pressure liquid refrigerant into a low-temperature low-pressure gas refrigerant, and thereby cooling down the indoor environment. Thereafter, the refrigerant sequentially passes through a gas side branch tube 15, a gas side shutoff valve 13, the fourth port 013d and the third port 013c of the four-way valve 013, and the inlet end 012c of the separator 012, and enters the separator 012.

It will be noted that in the above cooling mode, the ejector 05 does not operate.

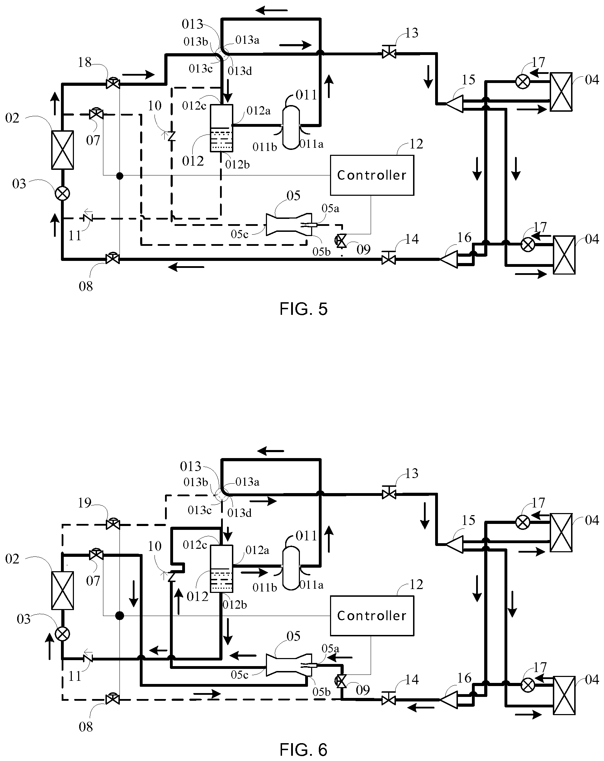

In an example, referring to FIG. 5, which shows a flow direction of refrigerant in the normal heating mode, it is known that in the normal heating mode, the compressor 011 compresses a low-temperature low-pressure gas refrigerant into a high-temperature high-pressure gas refrigerant, and discharges the high-temperature high-pressure gas refrigerant through the exhaust port 011a. The high-temperature high-pressure gas refrigerant sequentially passes through the first port 013a and the fourth port 013d of the four-way valve 013, a gas-side shutoff valve 13, and a gas-side branch tube 15, and enters the indoor heat exchanger 04. The indoor heat exchanger 04 serves as a condenser, condensing the high-temperature high-pressure gas refrigerant into a medium-temperature high-pressure liquid refrigerant, and thereby warming up the indoor environment. Thereafter, the liquid refrigerant sequentially passes through the second throttle device 17, the liquid-side branch tube 16, the liquid-side shutoff valve 14, the second electromagnetic valve 08, and the first throttle device 03, and enters the outdoor heat exchanger 02. The outdoor heat exchanger 02 serves as an evaporator, evaporating the liquid refrigerant into a gas refrigerant. The gas refrigerant sequentially passes through the fourth electromagnetic valve 18, the second port 013b and the third port 013c of the four-way valve 013, and the inlet end 012c of the separator 012, and enters the separator 012.

It will be noted that in the normal heating mode, the ejector 05 does not operate.

In an example, referring to FIG. 6, which shows a flow direction of refrigerant in the low-temperature heating mode, it is known that, the high-temperature high-pressure gas refrigerant discharged from the exhaust port 011a of the compressor 011 sequentially passes through the first port 013a and the fourth port 013d of the four-way valve 013, the gas-side shutoff valve 13, and the gas-side branch tube 15, and enters the indoor heat exchanger 04. The indoor heat exchanger 04 serves as a condenser, condensing the high-temperature high-pressure gas refrigerant into a medium-temperature high-pressure liquid refrigerant, thereby warming up the indoor environment. Then, the liquid refrigerant passes through the second throttle device 17, the liquid-side branch tube 16, the liquid-side shutoff valve 14, and the third electromagnetic valve 09, and enters the injection inlet 05a of the ejector 05. A low pressure environment is formed through throttling of the internal nozzle of the ejector 05, thereby attracting the refrigerant at the ejector inletejector inlet 05b of the ejector 05 into the ejector 05. Through the action of the mixing section and the diffusion section of the ejector 05, the mixed refrigerant increases the pressure at the outlet end of the ejector 05. Then, the refrigerant flowing out of the outlet end 05c of the ejector 05 passes through the first check valve 10 and enters the inlet end 012c of the separator 012. The gas refrigerant flowing out of the gas outlet end 012a of the separator 012 enters the compressor 011, thereby increasing a suction pressure of the compressor 011. The liquid refrigerant flowing out of the liquid outlet end 012b of the separator 012 sequentially passes through the second check valve 11, the first throttle device 03, the outdoor heat exchanger 02, and the first electromagnetic valve 07, and then returns to the ejector inletejector inlet 05b of the ejector 05.

It will be noted that in the low-temperature heating mode, the ejector 05 operates.

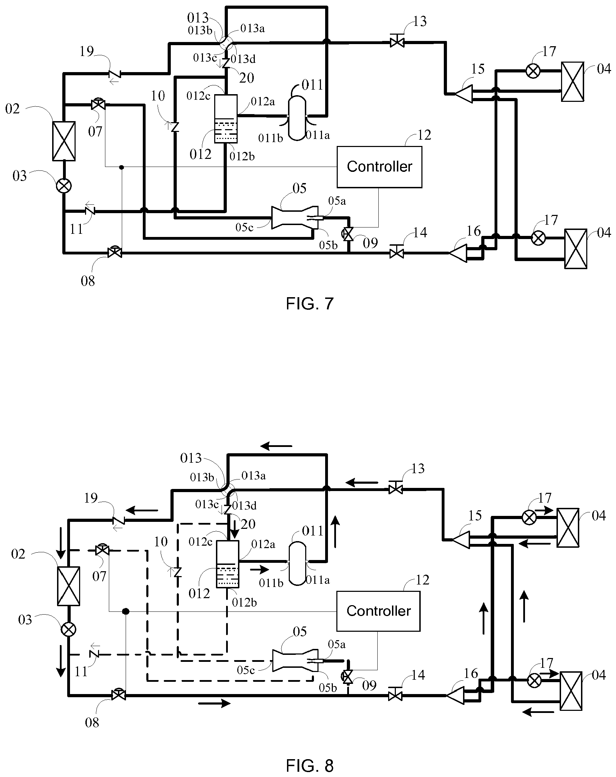

For example, referring to FIG. 7, which is a schematic structural diagram of an air conditioning heat pump system using an ejector according to another embodiment of the present invention, in a case where the controllable valve 06 is a third check valve 19, the air conditioning heat pump system using an ejector further includes a fourth check valve 20, and the fourth check valve 20 is arranged on a pipe between the third port 013c of the four-way valve 013 and the inlet end 012c of the separator 012. The flow direction of the third check valve 19 is from the second port 013b of the four-way valve 013 to the one end of the outdoor heat exchanger 02, and the flow direction of the fourth check valve 20 is from the third port 013c of the four-way valve 013 to the inlet end 012c of the separator 012. In an example, the controller is configured to:in the colling mode, control the second electromagnetic valve 08 to open the pipe, and control the first electromagnetic valve 07 and the third electromagnetic valve 09 to close the pipe;in the heating mode, control the first electromagnetic valve 07 and the third electromagnetic valve 09 to open the pipe, and control the second electromagnetic valve 08 to close the pipe.

In an example, referring to FIG. 8, which shows a flow direction of refrigerant in the cooling mode, it is known that the pipe between the third port 013c of the four-way valve 013 and the inlet end 012c of the separator 012 is opened. Therefore, a circulation process of refrigerant in FIG. 8 is the same as a circulation process of refrigerant in FIG. 4, and details are not described herein again.

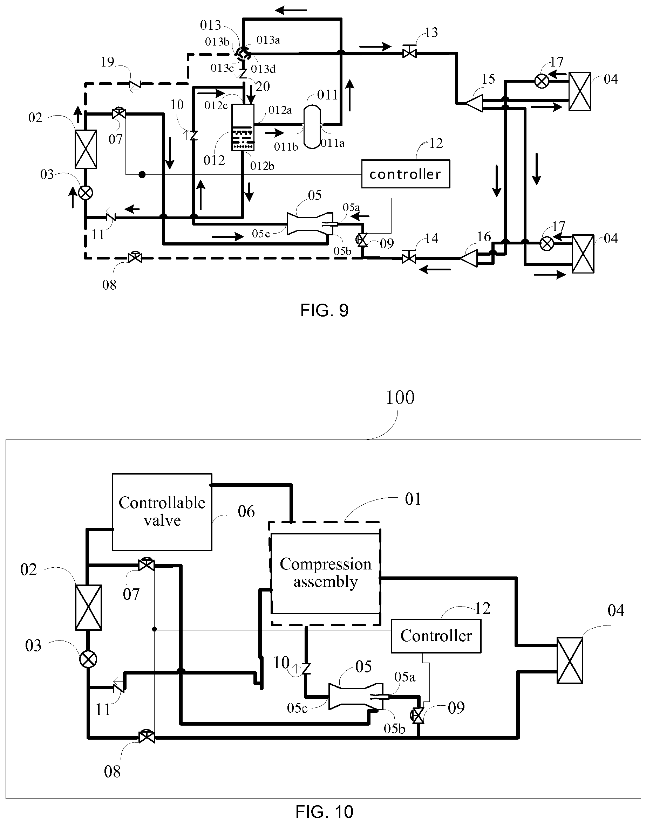

In an example, referring to FIG. 9, which shows a flow direction of refrigerant in the heating mode, it is known that a circulation process of refrigerant in FIG. 9 is the same as the circulation process of refrigerant in FIG. 6, and details are not be described herein again.

The air conditioning heat pump system using an ejector provided by embodiments of the present disclosure has added the following components to a conventional air conditioning heat pump system: a controllable valve 06 for controlling the flow direction arranged on a pipe between the first end of the compression assembly 01 and the one end of the outdoor heat exchanger 02, a first electromagnetic valve 07 arranged on a pipe between the ejector inlet 05b of the ejector 05 and the one end of the outdoor heat exchanger 02, a second electromagnetic valve 08 arranged on a pipe between the another end of the first throttle device 03 and the one end of the indoor heat exchanger 04, a third electromagnetic valve 09 arranged on a pipe between the injection inlet 05a of the ejector 05 and the one end of the indoor heat exchanger 04, a first check valve 10 arranged on a pipe between the third end of the compression assembly 01 and the outlet end 05c of the ejector 05, a second check valve 11 arranged on a pipe between a fourth end of the compression assembly 01 and the another end of the first throttle device 03, and the controller 12. In this way, the controller 12 is capable of controlling the opening and closing of the first electromagnetic valve 07, the second electromagnetic valve 08, and the third electromagnetic valve 09 in different operating modes, thereby realizing both the cooling mode and the heating mode.

Embodiments of the present invention provide an air conditioner 100. As shown in FIG. 10, the air conditioner 100 includes the air conditioning heat pump system using an ejector described above.

Embodiments of the present invention provide an outdoor unit, the out door unit includes the air conditioning heat pump system using an ejector described above.

For example, as for components and structure of the air conditioner 100 and description of the components in the air conditioner 100, reference may be made to the description of the air conditioning heat pump system using an ejector above, and details are not described herein again.

An air conditioner control method provided by embodiments of the present invention will be described below based on related description of the air conditioning heat pump system using an ejector in the above embodiments. In the following embodiments, as for description of technical terms, concepts, etc. related to the above embodiments, reference may be made to the above embodiments, and details are not described herein again.

The air conditioner control method provided by the embodiments of the present invention includes:
In 301, the controller of the air conditioner controls the opening and closing of the controllable valve, the first electromagnetic valve, the second electromagnetic valve, and the third electromagnetic valve in the air conditioner according to a current operating mode.

Optionally, in a case where the controllable valve in the air conditioner is a fourth electromagnetic valve, the controller is further configured to control the opening and closing of the fourth electromagnetic valve, and the step 301 includes the following steps.

In 301a, in the cooling mode, the controller controls the fourth electromagnetic valve and the second electromagnetic valve to open the pipe, and controls the first electromagnetic valve and the third electromagnetic valve to close the pipe.

In 301b, in the normal heating mode, the controller controls the fourth electromagnetic valve and the second electromagnetic valve to open the pipe, and controls the first electromagnetic valve and the third electromagnetic valve to close the pipe.

In 301c, in the low-temperature heating mode, the controller controls the fourth electromagnetic valve and the second electromagnetic valve to close the pipe, and controls the first electromagnetic valve and the third electromagnetic valve to open the pipe.

Optionally, in a case where the controllable valve in the air conditioner is a third check valve, the flow direction of the third check valve is from the first end of the compression assembly to the one end of the outdoor heat exchanger; and the air conditioner further includes a fourth check valve, and the flow direction of the fourth check valve is from the third port of the four-way valve to the inlet end of the separator. In this case, step 302 includes the following steps.

In 302a, in the cooling mode, the controller controls the second electromagnetic valve to open the pipe, and controls the first electromagnetic valve and the third electromagnetic valve to close the pipe.

In 302b, in the heating mode, the controller controls the first electromagnetic valve and the third electromagnetic valve to open the pipe, and controls the second electromagnetic valve to close the pipe.

By adding the following components to a conventional air conditioning heat pump system: a controllable valve for controlling the flow direction arranged on a pipe between the first end of the compression assembly and the one end of the outdoor heat exchanger, a first electromagnetic valve arranged on a pipe between the ejector inlet of the ejector and the one end of the outdoor heat exchanger, a second electromagnetic valve arranged on a pipe between the another end of the first throttle device and the one end of the indoor heat exchanger, a third electromagnetic valve arranged on a pipe between the injection inlet of the ejector and the one end of the indoor heat exchanger, a first check valve arranged on a pipe between the third end of the compression assembly and the outlet end of the ejector, a second check valve arranged on a pipe between a fourth end of the compression assembly and the another end of the first throttle device, and a controller, the air conditioner control method provided by embodiments of the present invention has realized both a cooling mode and a heating mode by using the controller to control the opening and closing of the first electromagnetic valve, the second electromagnetic valve, and the third electromagnetic valve in different operating modes.

## Claims

1. An air conditioning heat pump system using an ejector, comprising a compression assembly (01), an outdoor heat exchanger (02), a first throttle device (03), an indoor heat exchanger (04) and an ejector (05), wherein an injection inlet (05a) of the ejector (05) is connected to one end of the indoor heat exchanger (04), an ejector inlet (05b) of the ejector (05) is connected to one end of the outdoor heat exchanger (02), an outlet end (05c) of the ejector (05) is connected to a third end of the compression assembly (01), a first end of the compression assembly (01) is connected to the one end of the outdoor heat exchanger (02), a second end of the compression assembly (01) is connected to another end of the indoor heat exchanger (04), one end of the first throttle device (03) is connected to another end of the outdoor heat exchanger (02), and another end of the first throttle device (03) is connected to the one end of the indoor heat exchanger (04), wherein
the air conditioning heat pump system using an ejector further comprises: a controllable valve (06) for controlling the flow direction arranged on a pipe between the first end of the compression assembly (01) and the one end of the outdoor heat exchanger (02), a first electromagnetic valve (07) arranged on a pipe between the ejector inlet (05b) of the ejector (05) and the one end of the outdoor heat exchanger (02), a second electromagnetic valve (08) arranged on a pipe between the another end of the first throttle device (03) and the one end of the indoor heat exchanger (04), a third electromagnetic valve (09) arranged on a pipe between the injection inlet (05a) of the ejector (05) and the one end of the indoor heat exchanger (04), a first check valve (10) arranged on a pipe between the third end of the compression assembly (01) and the outlet end (05c) of the ejector (05), a second check valve (11) arranged on a pipe between a fourth end of the compression assembly (01) and the another end of the first throttle device (03), and a controller (12), wherein
a flow direction of the first check valve (10) is from the outlet end (05c) of the ejector (05) to the third end of the compression assembly (01);
a flow direction of the second check valve (11) is from the fourth end of the compression assembly (01) to the another end of the first throttle device (03);
the controllable valve (06) is in an on state when a refrigerant flows from the first end of the compression assembly (01) to the one end of the outdoor heat exchanger (02); and
the controller (12) is configured to control opening and closing of the first electromagnetic valve (07), the second electromagnetic valve (08), and the third electromagnetic valve (09) according to a current operating mode.

2. The air conditioning heat pump system using an ejector according to claim 1, wherein the compression assembly (01) comprises a compressor (011), a separator (012), and a four-way valve (013); the compressor (011) comprises an intake port (011b) and an exhaust port (011a), the separator (012) comprises a liquid outlet end (012b), a gas outlet end (012a), and an inlet end (012c), the four-way valve (013) comprises a first port (013a), a second port (013b), a third port (013c), and a fourth port (013d), wherein
the first port (013a) is connected to the exhaust port (011a) of the compressor (011); the second port (013b) is connected to the one end of the outdoor heat exchanger (02) ; the third port (013c) is connected to the inlet end (012c) of the separator (012); and the fourth port (013d) is connected to the another end of the indoor heat exchanger (04);
the intake port (011b) of the compressor (011) is connected to the gas outlet end (012a) of the separator (012), and the liquid outlet end (012b) of the separator (012) is connected to the another end of the first throttle device (03) .

3. The air conditioning heat pump system using an ejector according to claim 1 or 2, wherein in a case where the controllable valve (06) is a fourth electromagnetic valve (18), the controller (12) is further configured to control opening and closing of the fourth electromagnetic valve (18) according to a current operating mode.

4. The air conditioning heat pump system using an ejector according to claim 3, wherein the controller (12) is configured to:
in a cooling mode, control the fourth electromagnetic valve (18) and the second electromagnetic valve (08) to open the pipe, and control the first electromagnetic valve (07) and the third electromagnetic valve (09) to close the pipe;
in a normal heating mode, control the fourth electromagnetic valve (18) and the second electromagnetic valve (08) to open the pipe, and control the first electromagnetic valve (07) and the third electromagnetic valve (09) to close the pipe;
in a low-temperature heating mode, control the fourth electromagnetic valve (18) and the second electromagnetic valve (08) to close the pipe, and control the first electromagnetic valve (07) and the third electromagnetic valve (09) to open the pipe.

5. The air conditioning heat pump system using an ejector according to claim 1 or 2, wherein in a case where the controllable valve (06) is a third check valve (19), a flow direction of the third check valve (19) is from the first end of the compression assembly (01) to the one end of the outdoor heat exchanger (02); the air conditioning heat pump system using an ejector further comprises a fourth check valve (20) arranged on a pipe between the third port (013c) of the four-way valve (013) and the inlet end (012c) of the separator (012), and a flow direction of the fourth check valve (20) is from the third port (013c) of the compression assembly (01) to the inlet end (012c) of the separator (012);
the controller (12) is configured to:
in a cooling mode, control the the second electromagnetic valve (08) to open the pipe, and control the first electromagnetic valve (07) and the third electromagnetic valve (09) to close the pipe;
in a heating mode, control the first electromagnetic valve (07) and the third electromagnetic valve (09) to open the pipe, and control the second electromagnetic valve (08) to close the pipe.

6. The air conditioning heat pump system using an ejector according to claim 1, wherein the air conditioning heat pump system using an ejector further comprises a second throttle device (17), wherein
the second throttle device (17) is configured to control a flow rate of refrigerant in a pipe between the indoor heat exchanger (04) and the injection inlet (05a) of the ejector (05).

7. An air conditioner (100), comprising the air conditioning heat pump system using an ejector according to any one of claims 1-6.

8. An air conditioner control method applied to the air conditioner according to claim 7, the method comprising:
controlling, by the controller (12) in the air conditioner (100), the opening and closing of the first electromagnetic valve (07), the second electromagnetic valve (08), and the third electromagnetic valve (09) according to a current operating mode.

9. The method according to claim 8, wherein in a case where the controllable valve (06) in the air conditioner (100) is a fourth electromagnetic valve (18), the controller (12) in the air conditioner (100) controls the opening and closing of the first electromagnetic valve (07), the second electromagnetic valve (08) and the third electromagnetic valve (09) according to a current operating mode; the controller (12) is further configured to control opening and closing of the fourth electromagnetic valve (18) according to a current operating mode; the controller (12) is configured to:
in a cooling mode, control the fourth electromagnetic valve (18) and the second electromagnetic valve (08) to open the pipe, and control the first electromagnetic valve (07) and the third electromagnetic valve (09) to close the pipe;
in a normal heating mode, control the fourth electromagnetic valve (18) and the second electromagnetic valve (08) to open the pipe, and control the first electromagnetic valve (07) and the third electromagnetic valve (09) to close the pipe;
in a low-temperature heating mode, control the fourth electromagnetic valve (18) and the second electromagnetic valve (08) to close the pipe, and control the first electromagnetic valve (07) and the third electromagnetic valve (09) to open the pipe.

10. The method according to claim 8, wherein in a case where the controllable valve (06) is a third check valve (19), a flow direction of the third check valve (19) is from the first end of the compression assembly (01) to the one end of the outdoor heat exchanger (02); and in a case where the air conditioner (100) further comprises a fourth check valve (20) , the fourth check valve (20) is arranged on a pipe between the third port (013c) of the four-way valve (013) and the inlet end (012c) of the separator (012), and a flow direction of the fourth check valve (20) is from the third port (013c) of the four-way valve (013) to the inlet end (012c) of the separator (012); and
"controlling, by the controller (12) in the air conditioner (100), the opening and closing of the first electromagnetic valve (07), the second electromagnetic valve (08), and the third electromagnetic valve (09) according to a current operating mode" comprises:
in a cooling mode, controlling the second electromagnetic valve (08) to open the pipe, and controlling the first electromagnetic valve (07) and the third electromagnetic valve (09) to close the pipe;
in a heating mode, controlling the first electromagnetic valve (07) and the third electromagnetic valve (09) to open the pipe, and controlling the second electromagnetic valve (08) to close the pipe.

11. An outdoor unit, comprising the air conditioning heat pump system using an ejector according to any one of claims 1-6.

## Patentansprüche

1. Klimaanlagenwärmepumpensystem mit Verwendung eines Ejektors, umfassend eine Kompressionsanordnung (01), einen Außenwärmetauscher (02), eine erste Drosselvorrichtung (03), einen Innenwärmetauscher (04) und einen Ejektor (05), worin ein Injektionseinlass (05a) des Ejektors (05) mit einem Ende des Innenwärmetauschers (04) verbunden ist, ein Ejektoreinlass (05b) des Ejektors (05) mit einem Ende des Außenwärmetauschers (02) verbunden ist, ein Auslassende (05c) des Ejektors (05) mit einem dritten Ende der Kompressionsanordnung (01) verbunden ist, ein erstes Ende der Kompressionsanordnung (01) mit dem einen Ende des Außenwärmetauschers (02) verbunden ist, ein zweites Ende der Kompressionsanordnung (01) mit einem anderen Ende des Innenwärmetauschers (04) verbunden ist, ein Ende der ersten Drosselvorrichtung (03) mit einem anderen Ende des Außenwärmetauschers (02) verbunden ist, und ein anderes Ende der ersten Drosselvorrichtung (03) mit dem einen Ende des Innenwärmetauschers (04) verbunden ist, worin
das Klimaanlagenwärmepumpensystem mit Verwendung eines Ejektors ferner umfasst: ein steuerbares Ventil (06) zur Steuerung der Strömungsrichtung, das an einer Rohrleitung zwischen dem ersten Ende der Kompressionsanordnung (01) und dem einen Ende des Außenwärmetauschers (02) angeordnet ist, ein erstes elektromagnetisches Ventil (07), das an einer Rohrleitung zwischen dem Ejektoreinlass (05b) des Ejektors (05) und dem einen Ende des Außenwärmetauschers (02) angeordnet ist, ein zweites elektromagnetisches Ventil (08), das an einer Rohrleitung zwischen dem anderen Ende der ersten Drosselvorrichtung (03) und dem einen Ende des Innenwärmetauschers (04) angeordnet ist, ein drittes elektromagnetisches Ventil (09), das an einer Rohrleitung zwischen dem Injektionseinlass (05a) des Ejektors (05) und dem einen Ende des Innenwärmetauschers (04) angeordnet ist, ein erstes Rückschlagventil (10), das an einer Rohrleitung zwischen dem dritten Ende der Kompressionsanordnung (01) und dem Auslassende (05c) des Ejektors (05) angeordnet ist, ein zweites Rückschlagventil (11), das an einer Rohrleitung zwischen einem vierten Ende der Kompressionsanordnung (01) und dem einen anderen Ende der ersten Drosselvorrichtung (03) angeordnet ist, und ein Steuergerät (12), worin
eine Strömungsrichtung des ersten Rückschlagventils (10) von dem Auslassende (05c) des Ejektors (05) zu dem dritten Ende der Kompressionsanordnung (01) verläuft;
eine Strömungsrichtung des zweiten Rückschlagventils (11) von dem vierten Ende der Kompressionsanordnung (01) zu dem einen anderen Ende der ersten Drosselvorrichtung (03) verläuft;
das steuerbare Ventil (06) sich in einem EIN-Zustand befindet, wenn ein Kühlmittel von dem ersten Ende der Kompressionsanordnung (01) zu dem einen Ende des Außenwärmetauschers (02) strömt; und
das Steuergerät (12) dafür ausgelegt ist, das Öffnen und das Schließen des ersten elektromagnetischen Ventils (07), des zweiten elektromagnetischen Ventils (08) und des dritten elektromagnetischen Ventils (09) nach einem aktuellen Betriebsmodus zu steuern.

2. Klimaanlagenwärmepumpensystem mit Verwendung eines Ejektors nach Anspruch 1, worin die Kompressionsanordnung (01) einen Kompressor (011), einen Abscheider (012) und ein Vierwegeventil (013) umfasst; der Kompressor (011) eine Ansaugöffnung (011b) und eine Absaugöffnung (011a) umfasst, der Abscheider (012) ein Flüssigkeitsauslassende (012b), ein Gasauslassende (012a) und ein Einlassende (012c) umfasst, das Vierwegeventil (013) eine erste Öffnung (013a), eine zweite Öffnung (013b), eine dritte Öffnung (013c) und eine vierte Öffnung (013d) umfasst, worin
die erste Öffnung (013a) mit der Absaugöffnung (011a) des Kompressors (011) verbunden ist; die zweite Öffnung (013b) mit dem einen Ende des Außenwärmetauschers (02) verbunden ist; die dritte Öffnung (013c) mit dem Einlassende (012c) des Abscheiders (012) verbunden ist; und die vierte Öffnung (013d) mit dem einen anderen Ende des Innenwärmetauschers (04) verbunden ist;
die Ansaugöffnung (011b) des Kompressors (011) mit dem Gasauslassende (012a) des Abscheiders (012) verbunden ist, und das Flüssigkeitsauslassende (012b) des Abscheiders (012) mit dem einen anderen Ende der ersten Drosselvorrichtung (03) verbunden ist.

3. Klimaanlagenwärmepumpensystem mit Verwendung eines Ejektors nach Anspruch 1 oder 2, worin in einem Fall, bei dem das steuerbare Ventil (06) ein viertes elektromagnetisches Ventil (18) ist, das Steuergerät (12) ferner dafür ausgelegt ist, das Öffnen und das Schließen des vierten elektromagnetischen Ventils (18) nach einem aktuellen Betriebsmodus zu steuern.

4. Klimaanlagenwärmepumpensystem mit Verwendung eines Ejektors nach Anspruch 3, worin das Steuergerät (12) dafür ausgelegt ist:
in einem Kühlmodus, das vierte elektromagnetische Ventil (18) und das zweite elektromagnetische Ventil (08) zu steuern, um die Rohrleitung zu öffnen, und das erste elektromagnetische Ventil (07) und das dritte elektromagnetische Ventil (09) zu steuern, um die Rohrleitung zu schließen;
in einem normalen Heizmodus, das vierte elektromagnetische Ventil (18) und das zweite elektromagnetische Ventil (08) zu steuern, um die Rohrleitung zu öffnen, und das erste elektromagnetische Ventil (07) und das dritte elektromagnetische Ventil (09) zu steuern, um die Rohrleitung zu schließen;
in einem Niedrigtemperatur-Heizmodus, das vierte elektromagnetische Ventil (18) und das zweite elektromagnetische Ventil (08) zu steuern, um die Rohrleitung zu schließen, und das erste elektromagnetische Ventil (07) und das dritte elektromagnetische Ventil (09) zu steuern, um die Rohrleitung zu öffnen.

5. Klimaanlagenwärmepumpensystem mit Verwendung eines Ejektors nach Anspruch 1 oder 2, worin in einem Fall, bei dem das steuerbare Ventil (06) ein drittes Rückschlagventil (19) ist, eine Strömungsrichtung des dritten Rückschlagventils (19) von dem ersten Ende der Kompressionsanordnung (01) zu dem einen Ende des Außenwärmetauschers (02) verläuft; das Klimaanlagenwärmepumpensystem mit Verwendung eines Ejektors ferner ein viertes Rückschlagventil (20) umfasst, das an einer Rohrleitung zwischen der dritten Öffnung (013c) des Vierwegeventils (013) und dem Einlassende (012c) des Abscheiders (012) angeordnet ist, und eine Strömungsrichtung des vierten Rückschlagventils (20) von der dritten Öffnung (013c) der Kompressionsanordnung (01) zu dem Einlassende (012c) des Abscheiders (012) verläuft;
das Steuergerät (12) dafür ausgelegt ist:
in einem Kühlmodus, das zweite elektromagnetische Ventil (08) zu steuern, um die Rohrleitung zu öffnen, und das erste elektromagnetische Ventil (07) und das dritte elektromagnetische Ventil (09) zu steuern, um die Rohrleitung zu schließen;
in einem Heizmodus, das erste elektromagnetische Ventil (07) und das dritte elektromagnetische Ventil (09) zu steuern, um die Rohrleitung zu öffnen, und das zweite elektromagnetische Ventil (08) zu steuern, um die Rohrleitung zu schließen.

6. Klimaanlagenwärmepumpensystem mit Verwendung eines Ejektors nach Anspruch 1, worin das Klimaanlagenwärmepumpensystem mit Verwendung eines Ejektors ferner eine zweite Drosselvorrichtung (17) umfasst, worin
die zweite Drosselvorrichtung (17) dafür ausgelegt ist, einen Durchfluss von Kühlmittel in einer Rohrleitung zwischen dem Innenwärmetauscher (04) und dem Injektionseinlass (05a) des Ejektors (05) zu steuern.

7. Klimaanlage (100) umfassend das Klimaanlagenwärmepumpensystem mit Verwendung eines Ejektors nach einem der Ansprüche 1-6.

8. Klimaanlagensteuerungsverfahren, angewendet auf die Klimaanlage nach Anspruch 7, wobei das Verfahren umfasst:
Steuern, durch das Steuergerät (12) in der Klimaanlage (100), des Öffnens und des Schließens des ersten elektromagnetischen Ventils (07), des zweiten elektromagnetischen Ventils (08) und des dritten elektromagnetischen Ventils (09) nach einem aktuellen Betriebsmodus.

9. Verfahren nach Anspruch 8, worin in einem Fall, bei dem das steuerbare Ventil (06) in der Klimaanlage (100) ein viertes elektromagnetisches Ventil (18) ist, das Steuergerät (12) in der Klimaanlage (100) das Öffnen und das Schließen des ersten elektromagnetischen Ventils (07), des zweiten elektromagnetischen Ventils (08) und des dritten elektromagnetischen Ventils (09) nach einem aktuellen Betriebsmodus steuert; das Steuergerät (12) ferner dafür ausgelegt ist, das Öffnen und das Schließen des vierten elektromagnetischen Ventils (18) nach einem aktuellen Betriebsmodus zu steuern; das Steuergerät (12) dafür ausgelegt ist:
in einem Kühlmodus, das vierte elektromagnetische Ventil (18) und das zweite elektromagnetische Ventil (08) zu steuern, um die Rohrleitung zu öffnen, und das erste elektromagnetische Ventil (07) und das dritte elektromagnetische Ventil (09) zu steuern, um die Rohrleitung zu schließen;
in einem normalen Heizmodus, das vierte elektromagnetische Ventil (18) und das zweite elektromagnetische Ventil (08) zu steuern, um die Rohrleitung zu öffnen, und das erste elektromagnetische Ventil (07) und das dritte elektromagnetische Ventil (09) zu steuern, um die Rohrleitung zu schließen;
in einem Niedrigtemperatur-Heizmodus, das vierte elektromagnetische Ventil (18) und das zweite elektromagnetische Ventil (08) zu steuern, um die Rohrleitung zu schließen, und das erste elektromagnetische Ventil (07) und das dritte elektromagnetische Ventil (09) zu steuern, um die Rohrleitung zu öffnen.

10. Verfahren nach Anspruch 8, worin in einem Fall, bei dem das steuerbare Ventil (06) ein drittes Rückschlagventil (19) ist, eine Strömungsrichtung des dritten Rückschlagventils (19) von dem ersten Ende der Kompressionsanordnung (01) zu dem einen Ende des Außenwärmetauschers (02) verläuft; und in einem Fall, bei dem die Klimaanlage (100) ferner ein viertes Rückschlagventil (20) umfasst, das vierte Rückschlagventil (20) an einer Rohrleitung zwischen der dritten Öffnung (013c) des Vierwegeventils (013) und dem Einlassende (012c) des Abscheiders (012) angeordnet ist, und eine Strömungsrichtung des vierten Rückschlagventils (20) von der dritten Öffnung (013c) des Vierwegeventils (013) zu dem Einlassende (012c) des Abscheiders (012) verläuft; und
"Steuern, durch das Steuergerät (12) in der Klimaanlage (100), des Öffnens und des Schließens des ersten elektromagnetischen Ventils (07), des zweiten elektromagnetischen Ventils (08) und des dritten elektromagnetischen Ventils (09) nach einem aktuellen Betriebsmodus" umfasst:
in einem Kühlmodus, Steuern des zweiten elektromagnetischen Ventils (08), um die Rohrleitung zu öffnen, und Steuern des ersten elektromagnetischen Ventils (07) und des dritten elektromagnetischen Ventils (09), um die Rohrleitung zu schließen;
in einem Heizmodus, Steuern des ersten elektromagnetischen Ventils (07) und des dritten elektromagnetischen Ventils (09), um die Rohrleitung zu öffnen, und Steuern des zweiten elektromagnetischen Ventils (08), um die Rohrleitung zu schließen.

11. Außeneinheit, umfassend das Klimaanlagenwärmepumpensystem mit Verwendung eines Ejektors nach einem der Ansprüche 1-6.

## Revendications

1. Système de pompe à chaleur de climatisation utilisant un éjecteur, comprenant un ensemble de compression (01), un échangeur de chaleur extérieur (02), un premier dispositif d'étranglement (03), un échangeur de chaleur intérieur (04) et un éjecteur (05), où une entrée d'injection (05a) de l'éjecteur (05) est reliée à une extrémité de l'échangeur de chaleur intérieur (04), une entrée d'éjecteur (05b) de l'éjecteur (05) est reliée à une extrémité de l'échangeur de chaleur extérieur (02), une extrémité de sortie (05c) de l'éjecteur (05) est reliée à une troisième extrémité de l'ensemble de compression (01), une première extrémité de l'ensemble de compression (01) est reliée à l'extrémité de l'échangeur de chaleur extérieur (02), une deuxième extrémité de l'ensemble de compression (01) est reliée à une autre extrémité de l'échangeur de chaleur intérieur (04), une extrémité du premier dispositif d'étranglement (03) est reliée à une autre extrémité de l'échangeur de chaleur extérieur (02), et une autre extrémité du premier dispositif d'étranglement (03) est reliée à l'extrémité de l'échangeur de chaleur intérieur (04), où
le système de pompe à chaleur de climatisation utilisant un éjecteur comprend en outre :
une soupape commandable (06) pour commander la direction d'écoulement disposée sur un tuyau entre la première extrémité de l'ensemble de compression (01) et la première extrémité de l'échangeur de chaleur extérieur (02), une première soupape électromagnétique (07) disposée sur un tuyau entre l'entrée d'éjecteur (05b) de l'éjecteur (05) et la première extrémité de l'échangeur de chaleur extérieur (02), une deuxième soupape électromagnétique (08) disposée sur un tuyau entre l'autre extrémité du premier dispositif d'étranglement (03) et l'extrémité de l'échangeur de chaleur intérieur (04), une troisième soupape électromagnétique (09) disposée sur un tuyau entre l'entrée d'injection (05a) de l'éjecteur (05) et l'extrémité de l'échangeur de chaleur intérieur (04), un premier clapet anti-retour (10) disposé sur un tuyau entre la troisième extrémité de l'ensemble de compression (01) et l'extrémité de sortie (05c) de l'éjecteur (05), un deuxième clapet anti-retour (11) disposé sur un tuyau entre une quatrième extrémité de l'ensemble de compression (01) et l'autre extrémité du premier dispositif d'étranglement (03), et un dispositif de commande (12), où
une direction d'écoulement du premier clapet anti-retour (10) s'étend de l'extrémité de sortie (05c) de l'éjecteur (05) à la troisième extrémité de l'ensemble de compression (01);
une direction d'écoulement du second clapet anti-retour (11) s'étend de la quatrième extrémité de l'ensemble de compression (01) à l'autre extrémité du premier dispositif d'étranglement (03) ;
la soupape commandable (06) est dans un état de marche lorsqu'un réfrigérant s'écoule de la première extrémité de l'ensemble de compression (01) à l'extrémité de l'échangeur de chaleur extérieur (02) ; et
le dispositif de commande (12) est configuré pour commander l'ouverture et la fermeture de la première soupape électromagnétique (07), de la deuxième soupape électromagnétique (08) et de la troisième soupape électromagnétique (09) selon un mode de fonctionnement courant.

2. Système de pompe à chaleur de climatisation utilisant un éjecteur selon la revendication 1, où l'ensemble de compression (01) comprend un compresseur (011), un séparateur (012), et une soupape à quatre voies (013) ; le compresseur (011) comprend un orifice d'admission (011b) et un orifice d'échappement (011a), le séparateur (012) comprend une extrémité de sortie de liquide (012b), une extrémité de sortie de gaz (012a), et une extrémité d'entrée (012c), la soupape à quatre voies (013) comprend un premier orifice (013a), un deuxième orifice (013b), un troisième orifice (013c), et un quatrième orifice (013d), où
le premier orifice (013a) est relié à l'orifice d'échappement (011a) du compresseur (011); le deuxième orifice (013b) est relié à l'extrémité de l'échangeur de chaleur extérieur (02) ; le troisième orifice (013c) est relié à l'extrémité d'entrée (012c) du séparateur (012); et le quatrième orifice (013d) est relié à l'autre extrémité de l'échangeur de chaleur intérieur (04) ;
l'orifice d'admission (011b) du compresseur (011) est relié à l'extrémité de sortie de gaz (012a) du séparateur (012), et l'extrémité de sortie de liquide (012b) du séparateur (012) est reliée à l'autre extrémité du premier dispositif d'étranglement (03).

3. Système de pompe à chaleur de climatisation utilisant un éjecteur selon la revendication 1 ou 2, où, dans le cas où la soupape commandable (06) est une quatrième soupape électromagnétique (18), le dispositif de commande (12) est en outre configuré pour commander l'ouverture et la fermeture de la quatrième soupape électromagnétique (18) selon un mode de fonctionnement courant.

4. Système de pompe à chaleur de climatisation utilisant un éjecteur selon la revendication 3, où le dispositif de commande (12) est configuré pour :
dans un mode de refroidissement, commander la quatrième soupape électromagnétique (18) et la deuxième soupape électromagnétique (08) pour ouvrir le tuyau, et commander la première soupape électromagnétique (07) et la troisième soupape électromagnétique (09) pour fermer le tuyau ;
dans un mode de chauffage normal, commander la quatrième soupape électromagnétique (18) et la deuxième soupape électromagnétique (08) pour ouvrir le tuyau, et commander la première soupape électromagnétique (07) et la troisième soupape électromagnétique (09) pour fermer le tuyau ;
dans un mode de chauffage à basse température, commander la quatrième soupape électromagnétique (18) et la deuxième soupape électromagnétique (08) pour fermer le tuyau, et commander la première soupape électromagnétique (07) et la troisième soupape électromagnétique (09) pour ouvrir le tuyau.

5. Système de pompe à chaleur de climatisation utilisant un éjecteur selon la revendication 1 ou 2, où, dans le cas où la soupape commandable (06) est un troisième clapet anti-retour (19), une direction d'écoulement du troisième clapet anti-retour (19) s'étend de la première extrémité de l'ensemble de compression (01) à l'extrémité de l'échangeur de chaleur extérieur (02) ; le système de pompe à chaleur de climatisation utilisant un éjecteur comprend en outre un quatrième clapet anti-retour (20) disposé sur un tuyau entre le troisième orifice (013c) de la soupape à quatre voies (013) et l'extrémité d'entrée (012c) du séparateur (012), et une direction d'écoulement du quatrième clapet anti-retour (20) s'étend du troisième orifice (013c) de l'ensemble de compression (01) à l'extrémité d'entrée (012c) du séparateur (012);
le dispositif de commande (12) est configuré pour :
dans un mode de refroidissement, commander la deuxième soupape électromagnétique (08) pour ouvrir le tuyau, et commander la première soupape électromagnétique (07) et la troisième soupape électromagnétique (09) pour fermer le tuyau ;
dans un mode de chauffage, commander la première soupape électromagnétique (07) et la troisième soupape électromagnétique (09) pour ouvrir le tuyau, et commander la deuxième soupape électromagnétique (08) pour fermer le tuyau.

6. Système de pompe à chaleur de climatisation utilisant un éjecteur selon la revendication 1, où le système de pompe à chaleur de climatisation utilisant un éjecteur comprend en outre un deuxième dispositif d'étranglement (17), où
le deuxième dispositif d'étranglement (17) est configuré pour commander un débit de réfrigérant dans un tuyau entre l'échangeur de chaleur intérieur (04) et l'entrée d'injection (05a) de l'éjecteur (05).

7. Climatiseur (100), comprenant le système de pompe à chaleur de climatiseur utilisant un éjecteur selon l'une quelconque des revendications 1 à 6.

8. Procédé de commande de climatiseur appliqué au climatiseur selon la revendication 7, le procédé comprenant :
la commande, par le dispositif de commande (12) dans le climatiseur (100), de l'ouverture et de la fermeture de la première soupape électromagnétique (07), de la deuxième soupape électromagnétique (08), et de la troisième soupape électromagnétique (09) selon un mode de fonctionnement courant.

9. Procédé selon la revendication 8, où, dans le cas où la soupape commandable (06) dans le climatiseur (100) est une quatrième soupape électromagnétique (18), le dispositif de commande (12) dans le climatiseur (100) commande l'ouverture et la fermeture de la première soupape électromagnétique (07), de la deuxième soupape électromagnétique (08) et de la troisième soupape électromagnétique (09) selon un mode de fonctionnement courant ; le dispositif de commande (12) est en outre configuré pour commander l'ouverture et la fermeture de la quatrième soupape électromagnétique (18) selon un mode de fonctionnement courant ; le dispositif de commande (12) est configuré pour :
dans un mode de refroidissement, commander la quatrième soupape électromagnétique (18) et la deuxième soupape électromagnétique (08) pour ouvrir le tuyau, et commander la première soupape électromagnétique (07) et la troisième soupape électromagnétique (09) pour fermer le tuyau ;
dans un mode de chauffage normal, commander la quatrième soupape électromagnétique (18) et la deuxième soupape électromagnétique (08) pour ouvrir le tuyau, et commander la première soupape électromagnétique (07) et la troisième soupape électromagnétique (09) pour fermer le tuyau ;
dans un mode de chauffage à basse température, commander la quatrième soupape électromagnétique (18) et la deuxième soupape électromagnétique (08) pour fermer le tuyau, et commander la première soupape électromagnétique (07) et la troisième soupape électromagnétique (09) pour ouvrir le tuyau.

10. Procédé selon la revendication 8, où, dans le cas où la soupape commandable (06) est un troisième clapet anti-retour (19), une direction d'écoulement du troisième clapet anti-retour (19) s'étend de la première extrémité de l'ensemble de compression (01) à l'extrémité de l'échangeur de chaleur extérieur (02) ; et dans le cas où le climatiseur (100) comprend en outre un quatrième clapet anti-retour (20), le quatrième clapet anti-retour (20) est disposé sur un tuyau entre le troisième orifice (013c) de la soupape à quatre voies (013) et l'extrémité d'entrée (012c) du séparateur (012), et une direction d'écoulement du quatrième clapet anti-retour (20) s'étend du troisième orifice (013c) de la soupape à quatre voies (013) à l'extrémité d'entrée (012c) du séparateur (012) ; et « la commande, par le dispositif de commande (12) dans le climatiseur (100), de l'ouverture et de la fermeture de la première soupape électromagnétique (07), de la seconde soupape électromagnétique (08) et de la troisième soupape électromagnétique (09) selon un mode de fonctionnement courant » comprend :
dans un mode de refroidissement, la commande de la deuxième soupape électromagnétique (08) pour ouvrir le tuyau, et la commande de la première soupape électromagnétique (07) et de la troisième soupape électromagnétique (09) pour fermer le tuyau ;
dans un mode de chauffage, la commande de la première soupape électromagnétique (07) et de la troisième soupape électromagnétique (09) pour ouvrir le tuyau, et la commande de la deuxième soupape électromagnétique (08) pour fermer le tuyau.

11. Unité extérieure, comprenant le système de pompe à chaleur de climatisation utilisant un éjecteur selon l'une quelconque des revendications 1 à 6.
